# EUROPÄISCHE PATENTANMELDUNG

(11) **EP 2 175 089 A2**
(43) Veröffentlichungstag der Anmeldung: **14.04.2010**
(21) Anmeldenummer: 09012890.1
(22) Anmeldetag: 12.10.2009
(51) Int. Cl.: E04H 6/20, F03D 11/04, H01L 31/042, H01L 31/058

(54) **Vorrichtung für einen integrierten Multifunktionsstellplatz**

(30) Priorität: 10.10.2008 DE 102008051314
(71) Anmelder: ABOS Resources GmbH, 10719 Berlin (DE)
(72) Erfinder: Hiller, Stephan, 10623 Berlin14057 Berlin (DE)
(74) Vertreter: Arth, Hans-Lothar

(57) **Zusammenfassung**

Die vorliegende Erfindung betrifft einen integrierten Multifunktionsstellplatz, der verschiedene Funktionen in seinen unterschiedlichen Ausführungsformen kombiniert. Die integrierten Multifunktionsstellplätze befinden sich vor allem bei Freizeitparks, Flughäfen, Einkaufszentren, Park-and-ride-Zentren, Krankenhäusern, Universitäten, Messezentren oder Sporkstadien. Die integrierten Multifunktionsstellplätze sind derart ausgestaltet, dass sie nicht nur zum Abstellen von Mobilitätsmittels dienen sondern die Zeit während eine Mobilitätsmittel dort abgestellt ist, sinnvoll ausnutzen.

## Beschreibung

Die vorliegende Erfindung betrifft eine Vorrichtung für einen integrierten Multifunktionsstellplatz, die verschiedene Funktionen für einen Benutzer bereitstellt.

Eine wichtige Funktion dieser Vorrichtung soll das Wlederfinden eines geparkten Mobilitätsmittels wie beispielsweise eines Personenkraftwagens oder eines Fahrrads auf einem Parkplatz erleichtern. Grundsätzlich kann dies jedwede Parkgelegenheit sein. Insbesondere Großparkplätze beispielsweise von Freizeitparks. Flughäfen, Einkaufszentren, Park-and-ride-Zentren, Krankenhäusern, Universitäten, Messezentren, Supermärkten, Sportstadien und weitläufigen Firmenparkplätzen sind jedoch oft unübersichtlich. Hierfür soll, allgemein umfassend, ein mobiler Sender, ein stationärer Empfänger, eine Signalvorrichtung und ein Überbau für mindestens einen Stellplatz genutzt werden, wobei der Überbau mit der Signalvorrichtung versehen ist, welche mit dem Empfänger ausgerüstet ist, der mittels des mobilen Senders angesteuert werden kann und wobei die Signalvorrichtung ein optisches, akustisches, magnetisches, Funk- oder elektronisches Signal emittiert, welches zur Wiederfindung des geparkten Mobilitätsmittels dient Anstelle dieser Wiederfindungsfunktion oder in Kombination mit dieser Wiederfindungsfunktion kann der Multifunktionsstellplatz über eine oder mehrere weitere der hierin beschriebenen Funktionen wie beispielsweise der Signalgeberfunktion, Gesichtserkennungsfunktion, Personen-Klassifizierungsfunktion, Nummemschilderkennungsfunktion, Autotyperkennungsfunktion, Bezahlfunktion, Bildfunktion, Sicherheitsfunktion, Energieversorgungsfunktion, Elektrotankstellenfunktion verfügen.

Werden Fahrzeuge auf großen Parkplätzen abgestellt, so ergibt sich durchweg das Problem, nach der Rückkehr aus dem Urlaub oder dem Freizeitpark oder dem Stadionbesuch sein Fahrzeug wieder zu finden. Gerade bei Attraktionen mit hochfrequentiertem Besuch und großer Besucheranzahl wie beispielsweise Flughäfen oder Freizeitparks wie dem Phantasialand, dem Europapark oder dem Disneyworld, um nur einige beispielhaft zu nennen, versuchen die Betreiber die Wiederfindung der Fahrzeuge der Besucher auf den riesigen Parkplätzen bisher nur durch Nummerierung der Stellplätze zu erleichtern, wobei manchmal die einzelnen Bereiche eines großen Parkplatzes farblich unterteilt sind, um den Wiedererkennungswert zu erhöhen oder es werden Zettel oder Eintrittskarten bereitgestellt, auf denen der Besucher die Parkplatznummer notieren kann. Diese Zettel oder Eintrittskarten werden oftmals verlegt oder nach dem Eintritt weggeworfen oder erst gar nicht ausgefüllt, da kein Schreibgerät zur Hand ist.

Somit helfen diese Mittel nur ungenügend, nach der Rückkehr das geparkte Fahrzeug wieder zu finden und fast jeder hat bereits die Erfahrung gemacht, einige Zeit verschwenden zu müssen, um sein Fahrzeug zu suchen.

Desweiteren soll diese Erfindung der Bereitstellung von Informationen dienen, die für Benutzer eines solchen Stellplatzes von Interesse sein können. Die stetig anwachsende Mobilität und davon abgeleitet ein verändertes Arbeits- und Freizeitverhalten bringt es mit sich, daß immer häufiger Mobilitätsmittel bei Einrichtungen geparkt werden, mit denen der Benutzer nicht ständig in Berührung kommt oder ihm bisher nicht vertraut ist. Die Anzeige von sachdienlichen Informationen wie beispielsweise die Nummern von Check-In-Schaltem für abgehende Flüge an einem Flughafen oder aber über Eintrittspreise und Sonderattraktionen bei einem Freizeitpark kann daher eine Annehmlichkeit für den Benutzer darstellen und sich zeitsparend auswirken. Der Aufenthalt auf Großparkplätzen kann mitunter mit Wartezeiten verbunden sein, beispielsweise beim Abholen von Personen an einem Flughafen, Hafen oder Bahnhof, bei sich verspätenden Abflug-, Ablege- oder Abfahrtzeiten oder bei Begleitpersonen bei einer klinischen Untersuchung. Diese Wartezeit kann sinnvoll überbrückt werden, wenn Unterhaltungsinhalte wie beispielsweise Filme individuell ausgewählt und angeschaut werden können.

Open-Air-Großparkplätze stellen offene Flächen dar, die lediglich mit dem Parken von Mobilitätsmitteln nicht vollständig genutzt werden. Daher sollen erfindungsgemäß Vorrichtungen zur Energieerzeugung mit dem Stellplatz verbunden werden, um diese energieautark zu gestalten. Bevorzugt werden dabei alternative Energieformen.

Elektrofahrzeuge und Elektrofahrräder werden voraussichtlich in den nächsten Jahren einen immer größeren Marktanteil erringen. Bis jetzt fehlt jedoch in den meisten Regionen eine geeignete Infrastruktur, die ein schnelles und problemloses Aufladen ermöglicht. Hierzu soll der integrierte Multifunktionsstellplatz einen Beitrag dazu leisten, indem erfindungsgemäß eine Ladestation zur Verfügung stehen kann.

In den Sommermonaten und in heißeren Klimazonen das ganze Jahr über können sich im Freien geparkte Mobilitätsmittel insbesondere bei langen Parkzeiten erheblich aufheizen. Daher ist es eine Annehmlichkeit, wenn Fahrzeuge nicht in einem überheizten Zustand bestiegen werden müssen bzw. erst nach einigem Lüften bestiegen werden können. Dies soll erfindungsgemäß durch eine Belüttungsvorrichtung ermöglicht werden.

In kälteren Jahreszeiten und kalten Klimazonen das ganze Jahr über können sich im Freien geparkte Mobilitätsmittel insbesondere bei langen Parkzeiten erheblich abkühlen. Daher ist es eine Annehmlichkeit, wenn Fahrzeuge nicht in einem unterkühlten Zustand bestiegen werden müssen. Dies soll erfindungsgemäß durch eine Heizvorrichtung ermöglicht werden.

Somit hat sich die vorliegende Erfindung die Aufgabe gestellt, einen integrierten Multifunktionsstellplatz bereitzustellen, welche das Widerfinden eines geparkten Fahrzeugs auf einem großen open-air oder Freiluft-Parkplatz ermöglicht, dem Benutzer interessante Informationen oder selbst gewählte Programminhalte anbietet, energieautark ist, das Laden von Elektrofahrzeugen ermöglicht und gegebenenfalls eine angenehme Kühlung oder Aufheizung erzeugt. Die Nutzung mindestens einer dieser Funktionen soll Ober diesem integrierten Multifunktionsstellplatz ermöglicht werden.

Diese Aufgabe wird durch die Bereitstellung einer Vorrichtung gemäß Patentanspruch 1 gelöst. Weitere vorteilhafte Ausgestaltungen, Aspekte und Details der Erfindung ergeben sich aus den abhängigen Ansprüchen, der Beschreibung, den Beispielen und den Figuren.

Somit betrifft die vorliegende Erfindung unter anderem eine Vorrichtung zur Erleichterung des Wiederfindens eines geparkten Mobilitätsmütels auf einem Großraumparkplatz umfassend einen mobilen Sender, einen stationären Empfänger, eine Signalvorrichtung und einen Überbau für mindestens einen Stellplatz, wobei der Überbau mit der Signalvorrichtung versehen ist, welche mit dem Empfänger ausgerüstet ist, der mittels des mobilen Senders angesteuert werden kann und wobei die Slgnalvorrlchtung ein optisches, akustisches, magnetisches oder elektronisches Signal emittiert.

Die vorliegende Erfindung besteht also darin, dass der Besucher oder Fahrzeughalter des an einer bestimmten Stelle auf einem Parkplatz abgestellten Fahrzeugs beim Abstellen des Fahrzeugs einen kleinen Sender vorfindet, der bei der Rückkehr des Besuchers oder des Fahrzeughalters dieser Person auf einfache Weise den Weg zu seinem Fahrzeug weist, wobei der Sender nicht als satellitengestütztes Navigationsgerät funktioniert, sondern bei Betätigung ein Signal zum Empfänger schickt, der an dem Überbau angebracht ist, wo das betreffende Fahrzeug abgestellt ist. Der Empfänger löst dabei einen Signalgeber am Überbau aus, wodurch der Besucher oder Fahrzeughalter erkennen kann, wo sein Fahrzeug geparkt ist.

Als Großraumparkplatz werden hierin Parkflächen unter freiem Himmel bezeichnet, also keine Parkhäuser oder Tiefgaragen, wo Fahrzeuge auf mehreren Etagen abgestellt sind. Derartige open-air Parkplätze mit entsprechender Größe, so dass das Wiederfinden des abgestellten Fahrzeugs ein Problem darstellen könnte, findet man vor allem vor Freizeitparks, Flughäfen, Einkaufszentren, Supermärkten, Park-and-ride-Zentren mit entsprechenden Park-and-ride Parkplätzen, Krankenhäusern, Universitäten, Messezentren, Sportstadien, Bahnhöfen, Hotels, Häfen, weitläufigen Firmenparkplätzen oder anderen Einrichtungen, wo viele Fahrzeuge stundenweise, tageweise oder teilweise auch für längere Zeiträume von mehreren Wochen wie z.B. an Flughäfen abgestellt werden. Diese Parkplätze werden von dem einzelnen Benutzer in der Regel recht selten benutzt, so dass man nicht gewohnheitsmäßig einen gewissen Stellplatz benutzen kann, was einem die Wiederfindung des Fahrzeugs erleichtert, Zudem sind solche Parkplätze in der Regel stark besucht, so dass der einzelne Benutzer nur sehr selten bei einem weiteren Besuch denselben Stellplatz wie vorher nutzen kann, da dieser in der Regel belegt sein dürfte. Des Weiteren bringen diese Großraumparkplätze das Problem mit sich, das man teilweise einige Zeit über diese Parkplätze fährt, bevor man einen freien Stellplatz findet und dieses weiterhin zur Desorientierung und zur Erschwerung des Wiederfindens des Fahrzeugs bei der Rückkehr beiträgt, vor allem dann, wenn die Rückkehr erst nach einigen Tagen oder eventuell Wochen stattfindet.

Als Stellplatz wird hierin die einzelne Parknische für ein Mobilitätsmittel bezeichnet, wobei als Mobilitätsmittel sämtliche Arten von Fahrzeugen bezeichnet werden, beispielsweise Personenkraftwagen (PKW), Lastkraftwagen (LKW), Motorrad, Moped, Elektrofahrzeug, Fahrrad, Elektrofahrrad, Roller, Motorroller, Wohnwagen, Anhänger, Bus oder irgendein anderes Fortbewegungsmittel, welches man auf einem Großraumparkplatz abstellen könnte. Bevorzugt sind Fahrzeuge mit Elektromotor oder einer Kombination als Elektro- und Verbrennungsmotor, wobei der Begriff Verbrennungsmotor auch Brennstoffzellen umfasst. Somit sind die bevorzugten Fahrzeuge Elektroautos, Elektromotorräder und Elektrofahrräder.

Jeder einzelne Stellplatz auf dem Großraumparkplatz oder auch mehrere Stellplätze zusammen werden erfindungsgemäß mit einem Überbau beliebiger Gestalt versehen. Der Überbau erfüllt zumindest zwei Zwecke. Zum einen dient er dazu die Signalvorrichtung in einer für den Benutzer sichtbaren Höhe anzubringen und zum anderen auch dazu, eine Fläche für eine energieautarke Versorgung des Systems bereitzustellen und letztendlich das abgestellte Fahrzeug oder dessen Ent- und Beladung vor Regen, Schnee, Hagel als auch Sonne zu schützen.

Der Überbau kann daher in einer einfachen Form als Gerüst ausgestaltet sein, welches nur aus Stütz- und Querverstrebungen besteht, die Form eines Car-Ports haben, d.h. mit Dach aber offenen Seiten-, Vorder- und Rückflächen, als Container mit Dach, Rückfläche und Seitenflächen aber offener Vorderfläche oder als vollständig verschließbare Garage ausgestaltet sein. Natürlich sind auch beliebige andere Ausgestaltungen denkbar wie beispielsweise Überbauten mit offener Rück- und Vorderfläche aber geschlossenen Seitenflächen, so dass man von beiden Seiten, d.h. von vorne als auch von hinten in den Stellplatz und aus dem Stellplatz fahren kann. Vorzugsweise weist der Überbau jedoch zumindest eine Dachfläche mit den oben beschriebenen Vorteilen auf.

In einer besonders bevorzugten Ausführungsform besteht ein erfindungsgemäßer Stellplatz aus zwei dreieckigen Seitengestellen aus gleichschenkligen Dreiecken, bei denen die nicht gleichschenklige Seite parallel zum Untergrund zu liegen kommt und eine schwenkbare Achse zwischen diesen beiden dreieckigen Seitengestellen angebracht ist, wobei die Achse in Nähe der Dreieckspitzen gelagert ist. An dieser Achse ist eine Dachkonstruktion mit weiter unten beschriebenen Modifikationsmöglichkeiten angebracht.

Erfindungsgemäß ist auch eine spiegelbildliche Anbringung der dreieckigen Seitengestelle, wobei diese auf einer Spitze zu stehen kommen, die im Untergrund verankert ist, und die schwenkbare Achse jeweils in der Mitte der parallel zum Untergrund entlang der Parkplatzlängsachse gelagert ist.

In einer anderen Ausführungsform besteht der Stellplatz aus zwei rechteckigen Seitengestellen, bei denen die Achse wie zuvor beschrieben angebracht ist. Im weitem beschriebene optionale Zusatzvorrichtungen können an Querverstrebungen zwischen den vorder- und/oder rückseitigen Winkeln der rechteckigen Seitengestelle angebracht sein.

Die vorhergehende Ausführungsform kann durch die Verwendung trapezförmiger Seltengestelle variiert werden.

Eine Variante dieser Ausführungsform ist eine reckförmige Konstruktion, bei der die schwenkbare Achse, zwischen zwei senkrechten, im Untergrund verankerten Streben gelagert ist.

In einer weiteren Modifikation können zwei halbkreisförmige Seitengestelle verwendet werden, an deren jeweiligen Scheitelpunkt die zuvor beschriebene schwenkbare Achse gelagert ist. Alternativ dazu kann die schwenkbare Achse tangential gelagert sein.

Bei einer weiteren Modifikation ist der Stellplatz igluförmig, mit bis zu dreiseitig geschlossenen Wänden, oder aber durch Rippen nachgebildet. Hierbei bedarf die schwenkbare Achse einer zusätzlichen Auflagefläche, die am Scheitelpunkt der Iglukonstruktion angebracht ist. Auch hier kann die schwenkbare Achse alternativ tangential gelagert sein.

In einer weiteren Ausführungsform bestehen die Seitenflächen aus zwei Drelecken, bei denen eine Spitze an einem Seitenende des Stellplatzes im Boden verankert ist, eine Seite senkrecht von diesem Punkt nach oben ragt, eine Seite von diesem Punkt in schrägem Winkel nach oben ragt und die dritte Seite die beiden vorherigen Seiten in der Höhe parallel zum Untergrund entlang der Parkplatzlängsseite verbindet. In der Mitte der dritten Seite ist die zuvor beschriebene schwenkbare Achse gelagert.

In noch einer weiteren Ausführungsform besteht die Seitenfläche aus zwei Streben, bei denen eine wie ein schräg liegender Pylon im Boden verankert in die Luft steht und die zweite Strebe an ihrem oberen Ende parallel zum Untergrund entlang der Parkplatzlängsseite angebracht ist. ("Sieben-förmig"). In der Mitte der oberen Strebe ist die zuvor beschriebene schwenkbare Achse gelagert.

Eine weitere Ausführungsform variiert die vorhergehende insoweit, als daß die parallele Strebe nicht am Oberende, sondern am Fußende der schräg liegenden Pylonstrebe angebracht ist. Hierdurch entfällt eine Verankerung letzterer im Untergrund, da sie durch die Auflagefläche und die Masse der Bodenstrebe stabilisiert wird. Am oberen Ende der schräg liegenden Pylonstrebe ist die zuvor beschriebene schwenkbare Achse gelagert.

Die zuvor beschriebenen Ausführungsformen sind ebenfalls für einen Stellplatz für Zweiräder ("Bike-Port") geeignet. Insbesondere die letzte Ausführungsform wird bevorzugt.

Die Stellplatzkonstruktionen können vorgefertigt sein, vor Ort errichtete Einzelanfertigungen sein, oder in Steckbauweise errichtet werden. Pro Stellplatz kann jeweils eine einzelne Konstruktion errichtet werden, oder aber über eine Reihe von Stellplätzen hin weg in Modulbauweise aneinander gelagert. Bei Bike-Ports werden zudem in einer bevorzugten Ausführungsform mehrere Stellplätze unter einer Konstruktion zusammengefasst.

An dem Überbau ist der Empfänger angebracht, der das Signal vom Sender empfängt und an die Signalvorrichtung weiterleitet oder die Signalvorrichtung steuert. Als Sender und Empfänger können alle gängigen Geräte eingesetzt werden, welche die erforderliche Reichweite aufweisen, welche je nach Größe des Parkplatzes bis zu 1 km und mehr betragen kann.

Der Sender ist vorzugsweise in Form eines kleinen Chips ausgestaltet, der durch Drücken ein Signal an den Empfänger liefert. Ferner sollte der Sender recht klein und leicht sein, damit er problemlos in eine Geldbörse, Tasche oder Jackentasche passt. Jeder Stellplatz besitzt einen Sender, der beim oder nach dem Abstellen des Fahrzeugs auf dem Stellplatz vom Benutzer an sich genommen werden kann und bei der Rückkehr dazu dient, das Fahrzeug leichter wieder zu finden.

Bei bevorzugten Ausführungsformen übernimmt der Sender nicht nur die Funktion, bei Betätigung ein Signal zum Empfänger zu schicken, sondern dient gleichzeitig zur Aufzeichnung der Parkdauer und als Chip für die Bezahlung des Parkens und für das Verlassen des Parkplatzes oder des Stellplatzes.

Da jeder Stellplatz einen zugehörigen Sender besitzt, kann über den Sender festgestellt werden, wann ein Stellplatz belegt worden ist, wie lange ein Stellplatz belegt ist, so dass auch die Parkgebühren mittels des Senders berechnet als auch die Entrichtung der Parkgebühren an einem Parkautomat im Sender gespeichert und beim Verlassen des Stellplatzes oder des Parkplatzes überprüft werden können.

Des Weiteren dient in einer bevorzugten Ausführungsform der Sender auch dazu, eine Stellplatzsicherung einzuschalten, wenn der Sender am Stellplatz entnommen wird und diese Stellplatzsicherung erst dann wieder frei zu geben, wenn der Sender an dem Stellplatz in der dafür vorgesehenen Vorrichtung eingeführt, eingesteckt oder zurückgegeben wird. Als Stellplatzsicherung kann beispielsweise eine Wegfahrsperre, ein Riegel oder ein Tor dienen, so dass durch den Sender sichergestellt wird, dass auch nur der rechtmäßige Fahrzeugbesitzer bzw. Fahrzeugabsteller das Fahrzeug von dem Stellplatz fahren kann.

Das Wiederfinden des Fahrzeugs wird dadurch erreicht, dass der Benutzer bei seiner Rückkehr auf den Parkplatz den Sender betätigt, falls er sein Fahrzeug nicht finden sollte oder nicht dort findet, wo er es vermutet hat. Der Sender schickt dann ein Signal an den Empfänger, wodurch die Signaleinheit ausgelöst oder gesteuert wird.

Als Signalvorrichtung dient z.B. ein Blinklicht, Neonlicht, eine Sirene, ein Lautsprecher, Rauchzeichen, Laser, Monitor, Bildschirm (LCD-Bildschirm, Plasmabildschirm, LED-Screen, OLED-Screen etc.), eine Leinwand und andere Anzeigetafeln bzw. Werbetafeln oder eine mechanische oder elektrische Anzeigevorrichtung. Bevorzugt sind optische Signalvorrichtungen, welche auch in großer Entfernung vom Suchenden wahrgenommen werden können.

Insbesondere bevorzugt sind Bildschirme, welche verschiedenartige Anzeigemöglichkeiten bieten. Diese Signalvorrichtungen sind vorzugsweise auf dem Dach des Überbaus angebracht und verlaufen vorzugsweise entlang der Dachkante um die gesamte Dachfläche, so dass das optische Signal von dem Suchenden aus jeder Richtung wahrgenommen werden kann.

Das bereitgestellte Signal kann in der farblichen Darstellung liegen, welche ferner mit der Farbe des Senders übereinstimmen kann. Die Signalvorrichtung könnte somit hell oder farblich aufleuchten und so dem Suchenden den Stellplatz anzeigen, wo sein Fahrzeug geparkt ist.

Darüber hinaus könnte die Signalvorrichtung den Namen des Suchenden anzeigen, der seinen Namen bei der Entgegennahme des Senders in eine entsprechende Vorrichtung eingegeben hat. Bei weiteren bevorzugten Ausführungsformen verfügt der Überbau über ein Bildaufnahmegerät, beispielsweise eine Kamera, welche beispielsweise das Kennzeichen des Fahrzeugs aufgenommen hat, welches dann auf der Signalvorrichtung angezeigt wird oder gleich ein Bild des Fahrzeugs aufnimmt, so dass die Signalvorrichtung das Fahrzeug eventuell zusammen mit dem Kennzeichen darstellen kann.

Darüber hinaus können die Signalvorrichtungen, sofern sie nicht gerade in Benutzung sind und einem Suchenden den Stellplatz anzeigen sollen, auch beliebige andere Informationen wiedergeben, um die Benutzer des Parkplatzes zu Informieren, zu unterhalten oder den Weg zu bestimmten Ausgängen oder anderem zu weisen. Die dargestellten Informationen können daher von den Eintrittspreisen, Öffnungszeiten, Flugverbindungen. Lageplänen, usw. bis hin zu Comics, Fernsehprogramm, Werbung und Musikvideos oder ähnlichem reichen. Bevorzugt ist auch, wenn die Vorrichtung mit einer Anzeige für die Belegung des Stellplatzes ausgestattet ist. Des Weiteren ist bevorzugt, wenn die Signalvorrichtungen zur Parkplatzbewirtschattung eingesetzt werden, d.h. darauf freie Parkplätze angezeigt bzw. der Weg zu freien Parkplätzen gewiesen wird. Dies erspart Zeit und Energie, da unnötiges Suchen nach freien Parkplätzen entfällt, was für den Benutzer einen angenehmen Vorteil darstellt. Die Signalvorrichtungen könnten auch mit einer Leitzentrale verbunden sein, welche die Belegung und Auslastung der Parkplätze registriert und darüber die Parkraumbewirtschaftung optimiert und Statistiken führt.

Bei einer weiteren bevorzugten Ausführungsform ist im Sender eine einfache oder primitive Wegweisungsanzeige, vorzugsweise in Form von Pfeilen, angeordnet, welche bei Betätigung des Senders dazu führt, dass der Empfänger über die Signalvorrichtung den Sender lokalisiert und ein Signal an den Sender schickt, wodurch die Richtung angezeigt wird, in der sich das Fahrzeug befindet. Zusätzlich kann die Signalvorrichtung natürlich auch noch die bereits oben beschriebenen optischen und/oder akustischen Signale aussenden.

Die Funktionen der zuvor beschriebenen Ausführungsformen lassen sich unter dem Begriff Signalgeberfunktion zusammenfassen.

In einer bevorzugten Ausführungsform befindet sich an der Vorderseite des parkenden Fahrzeugs zugewandten Schmalseite des Stellplatzes in Sichthöhe ein Monitor. Falls der Stellplatz von zwei Seiten beparkt werden kann befindet sich eine entsprechende spiegelbildlich angebrachte Vorrichtung an der der Rückseite des parkenden Fahrzeugs zugewandten Schmalseite des Stellplatzes. Dieser Monitor kann genutzt werden, um für den Fahrzeugführer und/oder die ihn begleitenden Personen relevante Informationen anzuzeigen. Diese Informationen können die Parkdauer bzw. die Parkkosten betreffen, Angaben über die Besucherzahlen der Einrichtung, bei der sich der Stellplatz befindet, Abflug- bzw. Abfahrzeiten bei einem Parkplatz nahe einem Flugplatz, Hafen, Bahnhof oder Bushaltestelle. Fernsehprogramme wie beispielsweise Nachrichten können gezeigt werden, oder auch Werbeinhalte.

In einer Variante der zuvor beschriebenen Ausführungsform können zusätzlich eine oder mehrere Kameras an allen dafür geeigneten Stellen des Stellplatzes angebracht sein. Diese ist/sind mit einem auf einem Computer zentral oder dezentral gespeicherten Bildauswertungsprogramm verbunden, welches wahlweise eine Gesichtserkennungsfunktion, eine Personen-Klassifizierungsfunktion, eine Nummemschilderkennungsfunktion oder eine Autotyperkennungsfunktion oder Kombinationen davon enthält. Auf diese Weise können Personen direkt oder indirekt über das Nummernschild des Fahrzeugs erkannt werden, und/oder es kann eine Klassifizierung der mit dem Fahrzeug zu befördernden oder beförderten Personen nach Anzahl, Alter, Geschlecht, Kleidungsstil, sozialer Klasse, Verhaltensweisen etc. direkt oder indirekt über die Fahrzeugtyperkennung durchgeführt werden. Aufgrund der Ergebnisse der Bildauswertung kann die auf dem oben genannten Monitor angezeigte Information individuell auf die jeweilige Person bzw. Personengruppe abgestimmt werden.

Bei bekannten Stellplatz-Nutzem, beispielsweise Dauerkunden oder Mitarbeitern einer Firma auf einem Firmenparkplatz, können über den Monitor nach individueller Erkennung spezifisch zugeschnittene Botschaften angezeigt werden, beispielsweise eine Begrüßung, Ermunterung, Ermahnung oder Sachinformation, Ebenfalls können die beschriebenen Monitore für Botschaften zur Steigerung der corporate identity oder für politische, ideologische oder religiöse Botschaften verwendet werden.

Voraussetzung für eine individuelle Erkennung ist eine vorherige Registrierung des Fahrzeugführers bzw. des Nummernschildes des Fahrzeugs. Eine individuelle Abstimmung, welche Inhalte über den Monitor angezeigt werden, kann über Selbstauskunft über Präferenzen seitens des Fahrzeugführers erfolgen, oder aber durch Beobachtung und Klassifizierung durch Personal des Parkplatz- bzw. Anlagenbetreibers. Eine solche Selbstregistrierung kann entweder online, über ein Mobilfunkgerät oder an einem eigens eingerichteten Computerterminal erfolgen.

U.a. werden von der Firma Samsung Kameras vertrieben, die eine Fokussierung der Kamera auf zuvor eingespeicherte Gesichter innerhalb einer Gruppe erlaubt. Optional können solche Kameras die Bilderkennungsprogramme bei der individuellen Erkennung unterstützen.

In einer weiteren Variante kann die Software die Mimik der jeweiligen Person oder Personen analysieren und damit auf den momentanen Gemütszustand zurück schließen. Auch dieses Ergebnis kann zur Generierung individuell abgestimmter Botschaften herangezogen werden.

Eine weitere Variante umfasst ein Bilderkennungsprogramm, das durch Identifikation des Fahrzeugführers, beispielsweise durch Iris-Scan, für einen geeigneten Zeitraum eine Wegfahrsperre deaktiviert. Diese Wegfahrsperre kann beispielsweise aus vier bzw. acht Bremsklötzen bestehen, die jeweils vor und/oder hinter der Parkposition der Räder im Untergrund versenkt bzw. ausgefahren werden kann. Ein solches Arrangement bietet zusätzliche Sicherheit vor unbefugtem Entfernen eines Fahrzeugs von dem Stellplatz, da herkömmliche, mit der Zündung gekoppelte elektronische Wegfahrsperren verhältnismäßig einfach überwunden werden können. Im Falle von geparkten Zweirädern kann eine einer Parkkralle nachempfundene mit der Parkanlage mechanisch fest verbundene Wegfahrsperre deaktiviert werden, die beispielsweise das Vorderrad des geparkten Zweirads fest umschließt.

Zu den zuvor beschriebenen Zwecken geeignete Kameras und Bilderkennungsprogramme sind bereits kommerziell erhältlich bzw befinden sich in einer abschließenden Testphase. Diese Bilderkennungsprogramme können vom Hersteller festgelegte Voreinstellungen enthalten, vom Anwender programmiert werden oder auch selbstlernend sein. Die meisten Programme werten die erhaltenen Bilder zweidimensional aus, neuere Programme verfügen auch über dreidimensionale Auswertungsalgorithmen.

Alternativ zu den zuvor beschriebenen Ausführungsformen kann der besagte Monitor auch durch eine klassische Anzeigetafel bzw. einen beleuchteten Schaukasten mit und ohne Motivwechsel ersetzt werden. Der Gebrauch der besagten Kamera mit Bilderkennungsprogramm und individueller Anzeige entfällt in dieser Variante.

In einer Variante dieser Ausführungsform kann die Anzeigetafel auch eine Leinwand sein, auf die über einen an der Dachkonstruktion betestigten Beamer, der über einen zentralen oder dezentralen Computer angesteuert wird, Informationen projiziert werden.

In einer weiteren Variante kann diese Leinwand hohlspiegelartig geformt sein, wodurch sich bei geeigneter Bildtransmission dreidimensionale Eindrücke erzeugen lassen.

In einer weiteren Ausführungsform kann der zuvor beschriebene Monitor bzw. die Leinwand mit Beamer auch als ein Bildschirm für Autokino verwendet werden. Eine solche Funktion kann beispielsweise eine vorteilhafte Zusatzfunktion an einem Parkplatz sein, bei denen unvorhergesehene längere Wartezeiten auftreten können, beispielsweise an Flughäfen oder Häfen. Andererseits kann eine solche Parkanlage auch als Autokino mit individualisiertem Programm genutzt werden. Eine Aktivierung einer solchen Funktion mit der Auswahl aus mindestens einem Filmangebot kann über einen am Stellplatz angebrachten interaktiven Computer erfolgen, beispielsweise über einen Touch-Screen. Alternativ dazu kann eine Aktivierung und Auswahl eines Filmes auch über die Sende-/Signalgeber-Einheit erfolgen. Falls von dem Anlagenbetreiber gewünscht, kann eine Bezahlfunktion entweder über eine zuvor beschriebene Erkennung des Nummernschildes mit nachfolgender Belastung eines Kontos erfolgen, oder über die Sende-/Signalgeber-Einheit mit integrierter Zahlungsfunktion, über ein Kreditkartenlesegerät oder eine Münzeinwurfvorrichtung.

Die Funktionen der in diesem Abschnitt beschriebenen Ausführungsformen lassen sich unter dem Begriff Bildfunktion zusammenfassen.

In einer weiteren Ausführungsform kann das Gestell des Stellplatzes als Halterung für eine Beleuchtungsvorrichtung dienen. Diese kann bei tageszeitlichen oder baubedingten Einschränkungen der Sichtverhältnisse oder aufgrund von Einschränkungen wegen Wetterverhältnissen für eine wünschenswerte Beleuchtung sorgen, die das Aus- und Einsteigen bzw. das Beladen des Fahrzeugs ermöglicht. Zusätzlich wird ein subjektives Sicherheitsgefühl erzeugt.

In einer weiteren Ausführungsform kann sich am Gestell des Stellplatzes eine Überwachungskamera (echt oder Imitat) befinden, die sofern sie echt ist, Bilder an eine Leirwarte übermittelt, die bei unbefugtem Gebrauch oder verdächtigem Verhalten von Personen geeignete Maßnahmen einleiten kann. Auch durch diese Modifikation kann das subjektive Sicherheitsempfinden bei weitläufigen Parkanlagen gesteigert werden.

Die Funktionen der in diesem Abschnitt beschriebenen Ausführungsformen lassen sich unter dem Begriff Sicherheitsfunktion zusammenfassen.

Bei einer besonders bevorzugten Ausführungsform der vorliegenden Erfindung sind die Überbauten der Stellplätze energieautark, d.h. sie generieren die Energie selbst, welche für den Betrieb des Empfängers und der Signalvorrichfiung und eventuell auch des Senders und für die Stellplatzsicherung sowie weiterer mit dem Stellplatz verbundenen Vorrichtungen benötigt werden.

Die energieautarke Versorgung des Systems wird beispielsweise durch Windenergie, Solarenergie und/oder Erdwärme gedeckt. Dazu wird beispielsweise am oder auf dem Überbau ein Windrad angebracht oder in der Nähe des Überbaus betrieben, welche die erforderliche Energie liefert, die in entsprechenden Energiespeichern (Akkus) gespeichert werden kann, bis sie benötigt wird. Gleiches kann auch mit Solarmodulen erreicht werden, die vorzugsweise auf dem Dach des Überbaus angeordnet sind und die erforderliche Energie liefern, so dass die erfindungsgemäße Vorrichtung unabhängig von externer Energiezufuhr wird. Selbstverständlich kann auch eine Kombination aus Windenergie und Solarenergie eingesetzt werden. Zur optimalen Ausnutzung der Sonneneinstrahlung kann ferner das Dach des Überbaus kippbar oder neigbar oder höhenverstellbar ausgestaltet werden, um den optimalen Sonnenstrahleneinfallswinkel auszunutzen bzw. um Verschattungsproblematiken vorzubeugen. Darüber hinaus kann der Neigungswinkel automatisch durch eine Steuervorrichtung eingestellt werden, welche je nach Tageszeit, Jahreszeit und entsprechender Sonneneinstrahlung den Neigungswinkel innerhalb vorgegebenen Grenzen derart verändert, dass eine maximale Solarenergiegewinnung stattfinden kann. Die Achse, um die das gesamte Dach gekippt werden kann, kann quer oder parallel zur Längsachse eines geparkten Fahrzeugs angebracht sein. Desweiteren soll die Erfindung Ausführungsformen umfassen, bei denen Untereinheiten (Längsreihen) von Sonnenkollektoren zusätzlich um mindestens einen Freiheitsgrad relativ zu der Ebene des Daches gekippt werden können. Ferner kann die Steuervorrichtung den Neigungswinkel des schwenkbaren Daches auch bei Sturm, Hagel, Schnee oder Unwetter in eine bevorzugte Lage bringen, um dadurch die Signalvorrichtung als auch den gesamten Überbau vor Schäden zu bewahren.

Falls stattdessen oder zusätzlich ein Windrad auf dem Dach angebracht ist, verfügt dieses erfindungsgemäß über eine Vorrichtung, mit deren Hilfe die Ausrichtung des Windrades gemäß der zum jeweiligen Zeitpunkt vorherrschenden Windrichtung optimal eingestellt werden kann. Hierbei kann sich die Achse des Windrades um sich selber drehen. In einer weiteren Ausführungsform ist zusätzlich eine Höhenverslellung des Windrades vorgesehen.

Die Funktionen der in diesem Abschnitt beschriebenen Ausführungsformen lassen sich unter dem Begriff Energieversorgungsfunktion zusammenfassen.

In einer weiteren bevorzugten Ausführungsform ist eine Ladestation für Elektrofahrzeuge und -fahrräder in den Stellplatz integriert. Hierdurch kann eine Aufladung des Mobilitätsmittels während des Parkaufenthalts oder insbesondere zu diesem Zweck erfolgen. Die Energieeinspeisung erfolgt über die zuvor beschriebene optionale energieautarke Versorgung und/oder alternativ durch einen allgemeinen Stromversorgungsanschluss. Das benötigte Ladekabel kann entweder am Stellplatz bereitgestellt werden oder von dem Fahrzeugführer mitgebracht werden. Um eine genügende Energiemenge der autark gewonnenen Energie vorrätig zu erhalten, ist eine Speichereinheit (Akku) an dem Stellplatz vorhanden. Sollte die zuvor eingespeiste Energiemenge nicht zur gewünschten Beladung des Elektrofahrzeugs ausreichen, kann der zusätzliche Strombedarf über die allgemeine Stromversorgung gedeckt werden. Desweiteren kann auch eine Vorrichtung für Austauschakkus zur Verfügung gestellt werden, wobei durch den Nutzer an der Ladestation die leeren Akkus des Elektrofahrzeuges und/oder Elektrofahrrades und/oder Elektromotorrads gegen an der Ladestation geladene volle Akkus ausgetauscht werden. Dies kann durch den Fahrzeugnutzer selbst oder durch eine Servicekraft erfolgen. Auch das erneute Beladen ausgetauschter leerer Akkus kann durch Anschließen besagter Akkus an eine Ladestation durch den Fahrzeugnutzer selbst oder durch eine Servicekraft erfolgen. Umgekehrt kann auch über das Speichervolumen des Akkus heraus erzeugte Energie aus der autarken Versorgung in das allgemeine Stromnetz eingespeist werden. Zur optimalen Ausnutzung der autark erzeugten Energie ist bevorzugt eine MPP-Tracking-Einheit in die Ladestation integriert (MPP: maximum power point). Durch Variation der erzeugten Stromstärke wird die erzeugte Leistung (Produkt aus Stromstärke und ke und Spannung) optimiert. Desweiteren wird ein Laderegler benötigt, über den das Beladen der Akkus typspezifisch umgesetzt wird. Herkömmlich wird der autark erzeugte Gleichstrom in die Speichereinheit eingespeist. Bei Stromentnahme muß zum Betreiben eines herkömmlichen Ladegerätes der Strom über einen Wechselrichter in Wechselstrom gewandelt werden. Da herkömmliche Motoren von Elektrofahrzeugen Gleichstrom benötigen, muß der Wechselstrom hierfür wiederum über einen Gleichrichter gewandelt werden. Die erfindungsgemäße Stellplatz-Vorrichtung kann mit einer derartigen Kombination aus Wechselrichter und Gleichrichter ausgestattet sein. Meist ist jedoch der Gleichrichter in das Elektrofahrzeug integriert. Alternativ kann die Speichereinheit über eine Innovative Ladeelektronik verfügen, die eine zeitweilige Umwandlung in Wechselstrom obsolet macht. Die verwendete Spannung und der ausgegebene Strom, mit dem das Elektrofahrzeug betrieben wird, richten sich jeweils nach den üblichen Maßgaben für das Land, in dem sich der Stellplatz befindet.

Zweckmäßigerweise verfügt die Ladestation über eine Anzeige des entnommenen Stromes, die eine Abrechnung ermöglicht. Dies kann entweder über eine zuvor beschriebene Erkennung des Nummernschildes mit nachfolgender Belastung eines Kontos erfolgen, oder über die Sende-/Signalgeber-Einheit mit integrierter Zahlungsfunktion, oder über ein Kreditkartenlesegerät.

Die Funktionen der in diesem Abschnitt beschriebenen Ausführungsformen lassen sich unter dem Begriff Elektrotankstellenfunktion zusammenfassen.

Erfindungsgemäß können die zuvor beschriebenen Ausführungsformen und Modifikationen je nach den Bedürfnissen des Anlagenbetreibers beliebig kombiniert werden. Falls sich beispielsweise aus Kostengründen ein Anlagenbetreiber entscheiden sollte, einen derartigen Stellplatz mit einer beliebigen Kombination an zuvor beschriebenen Funktionen, jedoch ohne die Wiederfindungsfunktion für Mobilitätsmittel betreiben zu wollen, soll dies ebenfalls erfindungsgemäß sein.

In einer weiteren Ausführungsform befindet sich in den Seitenteilen eines Stellplatzes jeweils ein großflächiger Ventilator, der den Stellplatz und das darauf geparkte Mobilitätsmittel kühlen kann. Dies kann insbesondere In Ländern mit einer starken Sonneneinstrahlung von Vorteil sein. Die Energie für die Ventilatoren kann durch die autarke Energieversorgung und/oder einen Stromnetzanschluss erfolgen. Durch manuelle Voreinstellung, das Internet und/oder über die zuvor beschriebene Sendefunktion kann der Beginn und Ende und die Intensität der Belüftung festgelegt werden. Beispielsweise kann ein Fahrzeug eine Stunde vor der erwarteten Rückkehr des Fahrzeugführers luftgekühlt werden, kurz vor seiner Ankunft setzt jedoch die Kühlung aus, damit ein angenehmes Einsteigen und/oder Beladen des Fahrzeugs möglich ist.

In weiteren Varianten kann sich der besagte Ventilator auch an einer oder beiden Kopfflächen des Stellplatzes oder unterhalb der Dachkonstruktion, und/oder in einem angewinkelten Zustand befinden.

In einer weiteren Ausführungsform befinden sich In den Seitenteilen eines Stellplatzes jeweils ein Heizluftaggregat oder ein Heizstrahler zur Erzeugung von Heißluft, die zum Erwärmen des Stellplatzes und des darauf geparkte Mobilitätsmittels verwendet werden können. Dies ist insbesondere in kalten Klimazonen von Vorteil, wenn kein unterkühltes geparktes Fahrzeug bestiegen werden muß. Desweiteren kann eine derartige Beheizung einem Vereisen der Fensterscheiben, einem Anfrieren von Funktionsteilen wie beispielsweise Scheibenwischern, einem Einfrieren von Kühlwasser und einem kältebedingten Entladen der Fahrzeugbatterie vorbeugen. Auch hier kann die Energieversorgung über die zuvor beschriebenen Energiegewinnungsvorrichtungen erfolgen. Auch bei dieser Form kann eine Vorlaufszeit und die Intensität der Beheizung manuell, das Internet und/oder die besagte Senderfunktion geregelt werden.
Belüftung und Beheizung können auch in einer Ausführungsform gekoppelt sein.

Optional kann die Belüftung und/oder Beheizung auch mit der zuvor beschriebenen Bezahlfunktion gekoppelt sein.

Die zuvor beschriebene Ausführungsform kann mit dem Begriff Temperierungsfunktion bezeichnet werden.

Auf diese Weise ergibt sich eine Reihe von erfindungsgemäßen Kombinationen an charakteristischen Funktionen für einen integrierten Multifunktionsstellplatz:
- ein integrierter Multifunktionsstellplatz mit Signalgeberfunktion, Bildfunktion, Energieversorgungsfunktion, Elektrotankstellenfunktion und Temperierungsfunktion
- ein integrierter Multifunktionsstellplatz mit Signalgeberfunktion, Bildfunktion, Energieversorgungsfunktion und Elektrotankstellenfunktion
- ein integrierter Multifunktionsstellplatz mit Signalgeberfunktion, Bildfunktion, Energieversorgungsfunktion und Temperierungsfunktion
- ein integrierter Multifunktionsstellplatz mit Signalgeberfunktion, Bildfunktion, Elektrotankstellenfunktion und Temperierungsfunktion
- ein integrierter Multifunktionsstellplatz mit Signalgeberfunktion, Energieversor gungsfunktion, Elektrotankstellenfunktion und Temperierungsfunktion
- ein integrierter Multifunktionsstellplatz mit Bildfunktion, Energieversorgungsfunktion, Elektrotankstellenfunktion und Temperierungsfunktion
- ein integrierter Multifunktionsstellplatz mit Signalgeberfunktion, Bildfunktion und Fnergieversorgungsfunktion
- ein integrierter Multifunktionsstellplatz mit Signalgeberfunktion, Bildfunktion und Elektrotankstellenfunktion
- ein integrierter Multifunktionsstellplatz mit Signalgeberfunktion, Energieversorgungsfunktion und Elektrotankstellenfunktion
- ein integrierter Multifunktionsstellplatz mit Bildfunktion, Energieversorgungsfunktion und Elektrotankstellenfunktion
- ein integrierter Multifunktionsstellplatz mit Signalgeberfunktion, Bildfunktion und Temperierungsfunktion
- ein integrierter Multifunktionsstellplatz mit Signalgebertunktion, Energieversorgungsfunktion und Temperierungsfunktion
- ein integrierter Multifunktionsstellplatz mit Bildfunktion, Energieversorgungsfunktion und Temperierungsfunktion
- ein integrierter Multifunktionsstellplatz mit Signalgeberfunktion, Elektrotankstellenfunktion und Temperierungsfunktion
- ein integrierter Multifunktionsstellplatz mit Bildfunktion, Elektrotankstellenfunktion und Temperierungsfunktion
- ein integrierter Multifunktionsstellplatz mit Energieversorgungsfunktion, Elektrotankstellenfunktion und Temperierungsfunktion
- ein integrierter Multifunktionsstellplatz mit Signalgeberfunktion und Bildfunktion
- ein integrierter Multifunktionsstellplatz mit Signalgeberfunktion und Energieversorgungsfunktion
- ein integrierter Multifunktionsstellplatz mit Signalgeberfunktion und Elektrotankstellenfunktion
- ein integrierter Multifunktionsstellplatz mit Signalgeberfunktion und Temperierungsfunktion
- ein integrierter Multifunktionsstellplatz mit Bildfunktion und Energieversorgungsfunktion
- ein integrierter Multifunktionsstellplatz mit Bildfunktion und Elektrotankstellenfunktion
- ein integrierter Multifunktionsstellplatz mit Bildfunktion und Temperierungsfunktion
- ein integrierter Multifunktionsstellplatz mit Energieversorgungafunktion und Elektrotankstellenfunktion
- ein integrierter Multifunktionsstellplatz mit Energieversorgungsfunktion und Temperierungsfunktion
- ein integrierter Multifunktionsstellplatz mit Elektrotankstellenfunktion und Temperierungsfunktion
- ein integrierter Multifunktionsstellplatz mit Signalgeberfunktion
- ein integrierter Multifunktionsstellplatz mit Bildfunktion
- ein integrierter Multifunktionsstellplatz mit Energieversorgungsfunktion
- ein integrierter Multifunktionsstellplatz mit Elektrotankstellenfunktion
- ein integrierter Multifunktionsstellplatz mit Temperierungsfunktion

Der Kern der Erfindung kann demnach wir folgt zusammengefasst werden.

Eine Vorrichtung für einen integrierten Multifunktionsstellplatz für ein geparktes Mobilitätsmittel, die folgende Bestandteile umfasst:
a) einen überdachten Funktionsstellplatz, und
b) mindestens eine weitere Funktion, die aus der Gruppe Signalgeberfunktion, Bildfunktion, Energieversorgungsfunktion, Elektrotankstellenfunktion und Lüftungsfunktion ausgewählt wird.

Ein Multifunktionsstellplatz kann somit über mindestens eine, zwei, drei, vier, oder mehr der hierin beschriebenen Funktionen verfügen wie beispielsweise der Wiederfindungsfunktion, Signalgeberfunktion, Gesichtserkennungsfunktion, Personen-Klassifizierungsfunktion, Nummemschilderkennungsfunktion, Autotyperkennungsfunktion, Bezahlfunktion, Bildfunktion, Sicherheitsfunktion, Energieversorgungsfunktion, Elektrotankstellenfunktion verfügen.

Insbesondere ist auch die Ausführungsform mit Solarmodulen zur autarken Energieversorgung, wobei diese die Energie für z.B. eine Erkennungsfunktion liefern können als auch die Anzeigevorrichtungen mit Energie versorgen können als auch eine Energleversorgungsfunktion oder Elektrotankstellenfunktlon ermöglichen können. Derartige Synergien zwischen den einzelnen Funktionen werden vorzugsweise ausgenutzt.

Insgesamt soll die Erfindung einen Platz zum Abstellen eines Mobilitätsmittels derart funktionalisieren, dass der Platz, der für das Mobilitätsmittel benötigt wird, nicht nur zum vorübergehenden Aufbewahren des Mobilitätsmittels weitgehend sinnlos bzw. funktionslos genutzt bzw. verschwendet wird sondern die Zeit sinnvoll nutzt, während das Mobilitätsmittel sich auf dem Platz befindet, sei es durch die Bereitstellung von nutzerspezifischen Informationen, die Betankung des Mobilitätsmittels, dessen Sicherung oder Wiederfindung, wobei die Bereitstellung von nutzerspezifischen Informationen einer der wesentlichen Aspekte ist.

### Figurenbeschreibung

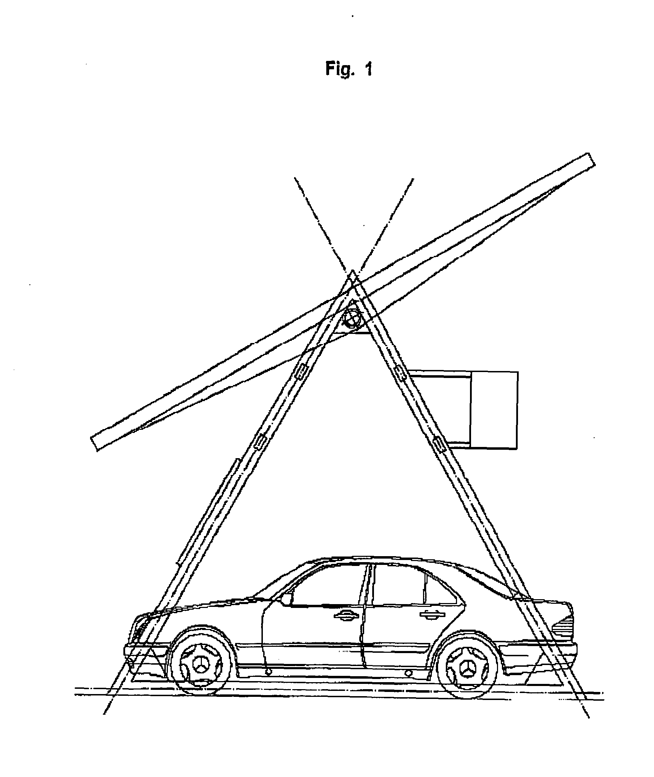

- Figur 1: zeigt einen Überbau für einen Stellplatz in Form eines Car-Ports, wobei das Gestell für den Car-Port aus zwei gleichschenkligen Dreiecken an den Seitenflächen besteht und das Dach um eine Achse schwenkbar zwischen den beiden dreieckigen Gestellen gelagert ist. Auf der Dachfläche befinden sich Solarmodule, welche für das energieautarke Betreiben der Signalvorrichtung sowie der Sender und Empfänger geeignet und einsetzbar sind. Die Signalvorrichtung ist an einem Schenkel des Gestells angebracht. Die Signalvorrichtung kann aber auch an mehreren Schenkeln des Gestells, am Rand der Dachfläche, unter dem Dach oder zwischen den Schenkeln des Gestells angebracht werden als auch rund um die Dachfläche oder das Gestell herumlaufen. Der Empfänger befindet sich an der Signalvorrichtung und der Sender (nicht gezeigt) abnehmbar in ca. 1,5 m Höhe an einem Schenkel des Gestells.

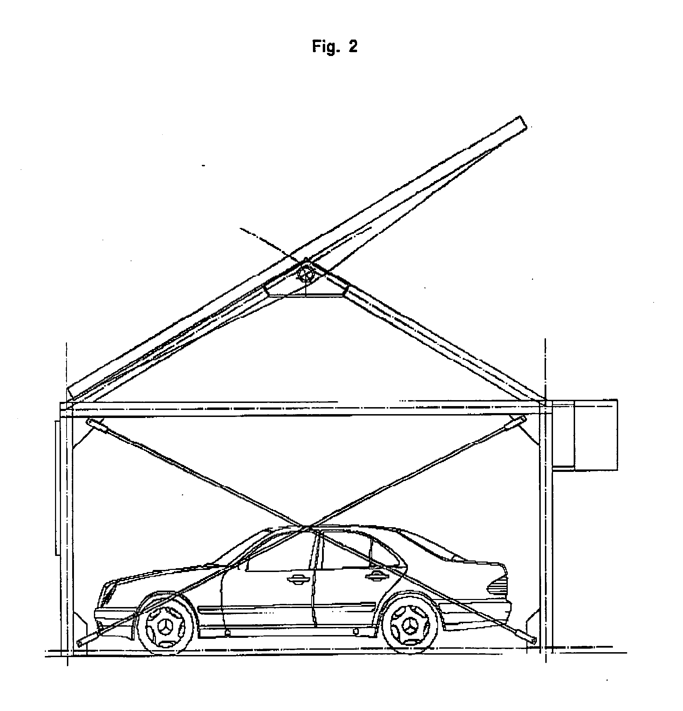

- Figur 2: zeigt einen Überbau für einen Stellplatz in Form eines Car-Ports mit Spitzdach, wobei das Gestell für den Car-Port aus zwei Rechtecken an den Seitenflächen besteht mit aufgesetzten gleichschenkligen Dreiecken besteht und das Dach auf einer Achse schwenkbar zwischen den beiden dreieckigen Gestellen gelagert ist. Auf der Dachfläche befinden sich Solarmodule, welche für das energieautarke Betreiben der Signalvorrichtung sowie des Senders und Empfängers geeignet und einsetzbar sind. Die Signalvorrichtung ist an einem rechteckigen Gestell angebracht. Die Signalvorrichtung kann aber auch an mehreren Pfeilern des Gestells, am Rand der Dachfläche, unter dem Dach oder zwischen den Pfeilern des Gestells angebracht werden als auch rund um die Dachfläche oder das Gestell herumlaufen. Der Empfänger befindet sich an der Signalvorrichtung und der Sender (nicht gezeigt) abnehmbar in ca. 1,5 m Höhe an einem Schenkel des Gestells.

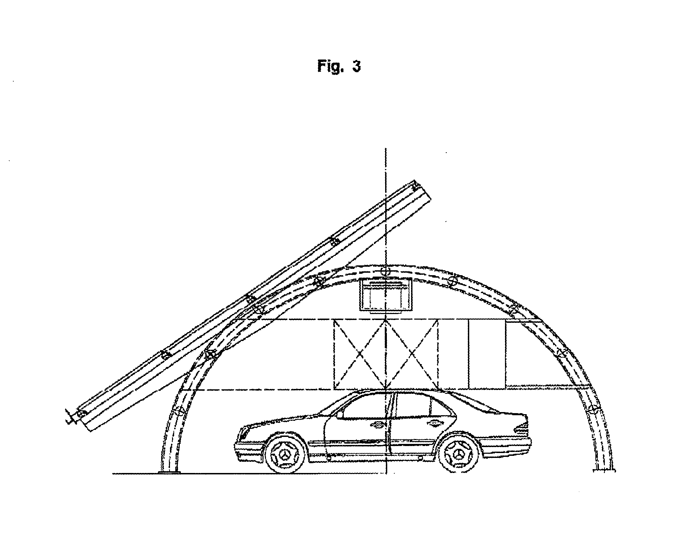

- Figur 3: zeigt einen Überbau für einen Stellplatz in Form eines Car-Ports, wobei die Seitenflächen des Gestelles für den Car-Port aus zwei halbkreisförmigen Bögen besteht. Über diese beiden Bögen kann eine Abdeckvorrichtung gezogen werden. Bei dieser Ausführungsform ist eine Vorrichtung zur Anbringung von Solarmodulen tangential am Vorderende der halbkreisförmigen Bügen über eine schwenkbare Achse gelagert. Ein optischer (oder akustischer) Signalgeber ist hierbei direkt unter dem Scheitelpunkt der Dachkonstruktion und über dem parkenden Fahrzeug angebracht. Von dort ist das Signal gut sichtbar bzw. hörbar. Der Sender (nicht gezeigt) ist abnehmbar in ca. 1,5 m Höhe an einer halbkreisförmigen Seitenstreben des Gestells angebracht.

### Ausführungsbeispiele

### Beispiel 1

Eine bevorzugte Ausführungsform der erfindungsgemäßen Vorrichtung besteht aus 4 Stützpfeilern und einem dreieckigen Aufsatz mit einer beweglichen Achse, welche mittig in Nähe der Dachspitzen angeordnet ist. Auf dieser beweglichen Achse lagert eine Dachfläche, welche den Stellplatz vor Regen, Schnee, Hagel und Sonnenstrahlung schützt und wobei die Dachfläche mit Solarmodule zur Energieversorgung des Systems ausgestattet ist.

An jeder Ecke des Überbaus befindet sich ein Blaulicht als Signalvorrichtung. Ein Empfänger ist des Weiteren am Überbau vorgesehen, der mit einem Sender bis zu einer Reichweite von 1000 m in Kontakt treten kann. Der Sender ist als kleiner Chip in der Größe eines Autoschlüssels ausgestaltet und befindet sich in einer Vorrichtung an einem Stützpfeiler des Überbaus.

### Beispiel 2

Eine andere bevorzugte Ausführungsform der vorliegenden Erfindung ist ein Überbau mit zwei dreieckigen Seitengestellen und einer schwenkbaren Achse zwischen diesen beiden dreieckigen Seitengestellen, wobei die Achse in Nähe der Dreieckspitzen angebracht ist. Auf dieser beweglichen Achse lagert eine Dachfläche, welche den Stellplatz vor Regen, Schnee, Hagel und Sonnenstrahlung schützt und wobei die Dachfläche mit Solarmodule zur Energieversorgung des Systems ausgestattet ist.

Unterhalb des Daches verläuft eine digitale Anzeigevorrichtung entlang der schwenkbaren Achse auf beiden Seiten zwischen den dreieckigen Außengestellen. Die digitale Anzeigevorrichtung wird energieautark über die Solarmodule auf der Dachfläche betrieben und zeigt Informationen oder auch Werbung an bis zu dem Zeitpunkt, wo der Empfänger vom Sender ein Signal empfängt. Zu diesem Zeitpunkt ändert sich die Anzeige auf der Signalvorrichtung damit der Suchende den Parkplatz identifizieren kann, wo er sein Fahrzeug abgestellt hat.

Ferner verfügt der Überbau über einen Wind- und Sonnensensor, der je nach Sonneneinstrahlung bzw. Windgeschwindigkeit den Neigungswinkel des schwenkbaren Daches derart verändert, dass die maximale Solarenergie gewonnen werden kann bzw. dass starker Wind die geringste Angriffsfläche vorfindet.

### Beispiel 3

Eine weitere bevorzugte Ausführungsform der erfindungsgemäßen Vorrichtung ist ein Car-Port mit halbkreisförmigen Seitengestellen. Die schwenkbare Achse ist tangential am zur Parkrichtung vorderen Bogen angebracht. Auf dieser Achse ist eine mit Solarmodulen bestückte Unterlage gelagert, wobei die Ebene der besagten Unterlage sich je nach Tages- und Jahreszeit dem Einfallwinkel der Sonneneinstrahlung nachgeführt wird. Quer zu der zur Parkrichtung nach vorne zeigenden Seite ist in Sichthöhe ein Bildschirm angebracht. Über eine an einem der halbkreisförmigen Seitengestelle angebrachten Kamera wird das Bild des parkenden Fahrzeugs an einem Computer übermittelt, auf dem ein Bilderkennungsprogramm ermittelt, wie viele Passagiere sich an Bord des Fahrzeugs befinden. Abgestimmt auf das Ergebnis wird beispielsweise bei einer Gruppe von vier Personen (zwei Erwachsene und zwei Kinder) der Sonderpreis für eine Familienkarte für den nahe liegenden Freizeitpark angezeigt. Die Signalvorrichtung ist ein über dem parkenden Fahrzeug an der Dachkonstruktion befestigte Leuchtvorrichtung, die mit LEDs in verschiedenen Farben bestückt ist. Über den Sender kann der Benutzer die gewünschte Farbe vorwählen, mit der das blinkende Licht ihm seinen Stellplatz anzeigt.

### Beispiel 4

In noch einer weiteren Ausführungsform sind die Seitengestelle jeweils auf einer Spitze stehende Dreiecke, die am Vorderende eines Bike-Ports angebracht sind. Auf der Dachkonstruktion befindet sich ein Windrad, das um eine vertikale Achse optimal zur gerade vorherrschenden Windrichtung ausgerichtet werden kann. Zwischen den beiden senkrechten Stangen am Vorderende des Stellplatzes befindet sich eine Anzeige, auf der bei Betätigung des Senders der Name (oder Code-Name) des Benutzers angezeigt wird. Diesen hat der Dauemutzer zuvor online registrieren lassen. Der Empfänger befindet sich an einer der beiden senkrechten Streben der Konstruktion. In diesen Bike-Port ist eine Ladestation für Elektrofahrräder integriert. An einer der zuvor beschriebenen senkrechten Streben befindet sich eine Ladestation. Über ein fest mit der Ladestation verbundenes Kabel wird das Elektrofahrrad beladen. Ein Kreditkartenlesegerät, das sich an der jeweils gegenüberliegenden senkrechten Strebe der Stellplatzkonstruktion befindet, erfolgt die Freischaltung und Abrechnung der entnommenen Energiemenge.

### Beispiel 5

An einem Car-Port mit viereckigen geschlossenen Seitengestellen befindet sich an der Vorderseite in Sichthöhe eine Leinwand. Auf diese kann ein an einer Querachse befestigter Beamer einen Film projizieren, der über eine Computereingabevorrichtung, die an einem Seitengestell des Car-Ports angebracht ist, ausgewählt wird. Eine in den Computer integrierte Zahlungsfunktion (beispielsweise Eingabe der Kreditkartennummer) sorgt für die Freischaltung und die Abrechnung. Während der Filmvorführung wird das geparkte Elektrofahrzeug über die im vorhergehenden Beispiel beschriebene Ladestation geladen. Die Abrechnung für die entnommene Energiemenge erfolgt ebenfalls über das zuvor beschriebene Computerterminal mit Touchscreen. Auf der Dachkonstruktion befinden sich Solarmodule, die die gewonnene Energie in Akkus einspeisen. Eine an einem der Seitengestelle angebrachte Überwachungskamera überträgt ein Bild an eine Leitwarte, wodurch die objektive and subjektive Sicherheit bei Benutzung dieses Car-Ports erhöht wird.

### Beispiel 6

Ein Car-Port mit zwei Seitengestellen aus zwei gleichschenkligen Dreiecken und einer Dachkonstruktion mit Solarmodulen kann von seinem Benutzer über einen unter der Dachkonstruktion angebrachten akustischen Signalgeber wiedergefunden werden. Bei Aktivierung des Senders spielt der akustische Signalgeber eine zuvor online ausgewählte oder hochgeladene Erkennungsmelodie, beispielsweise den bekannten Klingelton des Mobilfunkgerätes des Benutzers. An der Kopfseite des Car-Ports befindet sich in Sichthöhe ein dem Stellplatz zugewandter Monitor, über den beispielsweise bei dem sich an einem Flughafen befindlichen Parkplatz die in den nächsten zwei Stunden vorgesehenen Abflüge und Landungen und die Nummern der Check-In-Schalter bzw. das jeweilige Ankunftsterminal sowie mögliche Verspätungen angezeigt werden. Gleichzeitig steht, wie in den vorherigen Beispielen beschrieben, eine Ladestation für Elektrofahrzeuge zur Verfügung. Auf der Dachkonstruktion befindet sich eine in mehreren Freiheitsgraden ausrichtbare Batterie an Solarmodulen, Die Einspeisung in die klassischen Akkus erfolgt über eine zwischenzeitige Wandlung in Wechselstrom. An den Seitenflächen befindet sich in die Gestelle eingelassen jeweils ein großflächiger Ventilator, der für eine angenehme Temperatur an dem Fahrzeug sorgt. Eine unter dcr Dachkonstruktion neben dem akustischen Signalgeber angebrachte Beleuchtung wird während der Dämmerungs- und Nachtstunden automatisch aktiviert.

## Patentansprüche

1. Eine Vorrichtung für einen integrierten Multifunktionsstellplatz für ein geparktes Mobilitätsmittel, die folgende Bestandteile umfasst:
a) einen überdachten Funktionsstellplatz, und
b) mindestens eine weitere Funktion, die aus der Gruppe Signalgeberfunktion, Bildfunktion, Energieversorgungsfunktion, Elektrotankstellenfunktion und Lüftungsfunktion ausgewählt wird.

2. Die Vorrichtung gemäß Anspruch 1, wobei sich der integrierte Multifunktionsstellplatz für ein geparktes Mobilitätsmittel auf einem Parkplatz von Freizeitparks, Flughäfen, Einkaufszentren, Park-and-ride-Zentren, Krankenhäusern, Universitäten, Messezentren, Sportstadien, Bahnhöfen, Hotels, Häfen oder einem Firmengelände befindet.

3. Die Vorrichtung gemäß Anspruch 1 oder 2, wobei es sich bei dem Mobilitätsmittel um einen Personenkraftwagen, Lastkraftwagen, Motorrad, Moped, Elektrofahrzeug, Fahrrad, Elektrofahrrad, Roller, Motorroller oder ein anderes Fortbewegungsmittel handelt.

4. Die Vorrichtung gemäß einem der Ansprüche 1 bis 3, wobei der Überbau für den mindestens einen Stellplatz in Form eines Gerüstes, eines Containers, eines Car-Ports, einer Garage oder eines zumindest teilweise überdachten Stellplatzes vorliegt.

5. Die Vorrichtung gemäß einem der Ansprüche 1 bis 4, bei der die Signalgebcrfunktion einen mobilen Sender, einen stationären Empfänger und eine Signalvorrichtung umfasst, wobei der Überbau mit der Signalvorrichtung versehen ist, welche mit dem Empfänger ausgerüstet ist, der mittels des mobilen Senders angesteuert werden kann und wobei die Signalvorrichtung ein optisches, akustisches, magnetisches, Funk- oder elektronisches Signal emittiert.

6. Die Vorrichtung gemäß Anspruch 5, wobei die Signalvorrichtung ein Blinklicht, Neonlicht, Sirene, Lautsprecher, Rauchzeichen, Laser, Monitor, Bildschirm, OLED-Screens, Leinwand, Anzeigetafein oder eine mechanische oder elektrische Anzeigevorrichtung ist.

7. Die Vorrichtung gemäß einem der vorherigen Ansprüche, wobei die Signale vorrichtung den Namen des Fahrzeughalters des Mobilitätsmittels und/oder das Kennzeichen des Mobilitätsmittels und/oder ein Bild des Mobilitätsmittels anzeigt, welches auf dem Stellplatz steht, zu dem der Sender bzw. der Empfänger bzw. die Signalvorrichtung gehören, und/oder eine Anzeigevorrichtung aufweist, welche durch optische Anzeige die Position des Empfängers anzeigt und/oder die Belegung des Stellplatzes anzeigt.

8. Die Vorrichtung gemäß einem der vorherigen Ansprüche, wobei der mobile Sender abnehmbar an der Vorrichtung befestigt ist und neben der Senderfunktion zum Wiederfinden des geparkten Mobilitätsmittels auch als Parkschein zur Aufzeichnung der Parkdauer dient.

9. Die Vorrichtung gemäß einem der vorherigen Ansprüche, wobei die Vorrichtung des Weiteren über ein Aufzeichnungsmittel verfügt, welche das Kennzeichen und/oder ein Bild des geparkten Mobilitätsmittels aufzeichnet und an die Signalvorrichtung zur Anzeige weiterleitet.

10. Die Vorrichtung gemäß einem der vorherigen Ansprüche, bei der die Bildfunktion eine Bildanzeigemöglichkeit umfasst, die die Übermittlung von Informationen an den Benutzer des integrierten Multifunktionsstellplatzes ermöglicht, wobei die Bildanzeigemöglichkeit ein Monitor, eine Plakatwand, ein Schaukasten oder eine von einem Beamer projektionsfähige Leinwand ist und wobei die angezeigte Information von dem Anlagenbetreiber vorgegeben wird, mittels eine Kamera, die an einen Computer mit Bilderkennungssoftware für Personenerkennung, Personenklassifizierung und/oder Nummernschilderkennung ausgestattet ist, individualisiert werden kann und/oder von dem Stellplatzbenutzer aus einem Angebot ausgewählt werden kann.

11. Die Vorrichtung gemäß einem der vorherigen Ansprüche, bei der die Energieversorgungsfunktion eine energieautarke Versorgung mittels Windenergie, Solarenergie und/oder Erdwärme und/oder einen Stromnetzanschluss und optional eine Energieeinspeisemöglichkeit für die autark erzeugte Energie in das allgemeine Stromnetz umfasst, wobei die Vorrichtung für die Windenergieerzeugung ein auf der Dachkonstruktion des Stellplatzes angebrachtes Windrad und die Vorrichtung zur Solarenergienerzeugung eine Vielzahl an Solarmodulen auf der Dachkonstruktion des Stellplatzes ist.

12. Die Vorrichtung gemäß einem der vorherigen Ansprüche, bei der die Elektrotankstellenfunktion einen für Elektrofahrzeuge und/oder Elektrofahrräder geeigneten Energiespeicher in Wechselstrom, eine Energieentnahmevorrichtung, mindestens einen Energiezähler und optional eine MPP-Tracking-Einheit und optional einen Stromnetzanschluss und/oder eine Aufladevorrichtung für Austauschakkus umfasst.

13. Die Vorrichtung gemäß einem der vorherigen Ansprüche, bei der die Lüftungsfunktion mindestens einen an der Stellplatzvorrichtung angebrachten Ventilator umfasst.

14. Die Vorrichtung gemäß einem der vorherigen Ansprüche, wobei die Vorrichtung zusätzlich eine Bezahlfunktion für die mit dem Stellplatz verbundenen in Anspruch genommenen Dienstleistungen umfasst und der Zahlvorgang über Kamera-gestützte Personen- und/oder Fahrzeugerkennung mittels Abbuchungsverfahren, eine Sende-/Signalgeber-Einheit mit integrierter Zahlungsfunktion, ein Kreditkartenlesegerät und/oder eine Münzeinwurfvorrichtung erfolgt.

15. Die Vorrichtung gemäß einem der vorherigen Ansprüche, wobei die Vorrichtung zusätzlich eine im Untergrund versenkbare Wegfahrsperre umfasst, die über Kamera-gestützte Personenerkennung deaktiviert werden kann.
